# EUROPEAN PATENT APPLICATION

(11) **EP 4 507 049 A1**
(43) Date of publication of application: **12.02.2025**
(21) Application number: 22960322.0
(22) Date of filing: 30.09.2022
(51) Int. Cl.: H01M 10/0525, H01M 4/80, C09J 11/04

(54) **EXPANDABLE MICROSPHERE AND PREPARATION THEREOF, ELECTRODE SHEET COMPRISING EXPANDABLE MICROSPHERE, AND SECONDARY BATTERY**

(71) Applicant: Contemporary Amperex Technology Co., Limited, Fujian 352100 (CN)
(72) Inventor: ZHANG, Yuxi, Ningde City, Fujian 352100 (CN)
(74) Representative: Frick, Robert
(86) International application number: PCT/CN2022/123338
(87) International publication number: WO 2024/065703

(57) **Abstract**

The present application provides an expandable microbead having a core-shell structure, wherein the shell is made of melamine resin, and the core is mainly made of a foamable azo compound. The present application further provides an electrode plate, comprising a safe conductive coating coated on a surface of a current collector. The above-mentioned expandable microbead is used for the coating, thereby favorably preventing thermal runaway caused by abnormal battery temperature rise, and improving the safety performance of a lithium-ion battery.

## Description

### Technical Field

The present application relates to a battery electrode plate. In addition, the present application further relates to a secondary battery using the battery electrode plate.

### Background

In recent years, as secondary ion batteries are increasingly widely used, lithium-ion batteries are widely used in energy storage power source systems, such as water, fire, wind, and solar power stations, as well as many fields, such as electric tools, electric bicycles, electric motorcycles, electric vehicles, military equipment, and aerospace. However, when a lithium-ion battery is subjected to abnormal applications, such as impact, overcharge, or short circuit, energy inside the battery will be abnormally released, thereby resulting in self-heating of the battery, and enhancing internal pressure of the battery. The continued temperature rise will accelerate a series of exothermic side reactions inside the battery, thereby finally resulting in thermal runaway of the battery.

At present, some methods have been developed in the art to solve the above problems. However, existing methods fail to effectively and quickly prevent occurrence of the thermal runaway of the battery. Therefore, the battery still remains to be improved in this aspect.

### Summary of the Invention

In view of the above problems, an objective of the present application is to provide a battery electrode plate. A lithium-ion secondary battery obtained by using the battery electrode plate has very good safety performance.

In order to achieve the above objective, a first aspect of the present application provides an expandable microbead, having a core-shell structure, wherein the shell comprises or consists of a melamine resin, and the core comprises a foamable azo compound.

In any of embodiments, the expandable microbead has an initial foaming temperature of 80°C-200°C, and an optimal initial foaming temperature of 100°C-150°C.

Batteries usually need to experience a temperature of 80°C-100°C during production. In this process, the expandable microbead cannot expand, so that the initial foaming temperature of the microbead is most preferably higher than 100°C. In addition, when process conditions are satisfied, the lower initial foaming temperature of the microbead, the better. If the initial foaming temperature of the microbead is too high, the microbead neither can expand in time, nor can prevent abnormal discharge of the battery in time, during abnormal battery temperature rise, thereby failing to effectively improve the battery safety.

In any of embodiments, the expandable microbead has a Dv50 of 0.2-10 µm, optionally 0.5-5 µm, and optionally, the expandable microbead has a Dv50 of less than or equal to a thickness of the safe conductive coating.

A particle diameter of the expandable microbead within the above range can ensure that the expandable microbead has enough foaming capacity, and has enough influence on conductivity of the coating during expansion, thereby improving the battery safety. The particle diameter of the expandable microbead should not be too large, and otherwise, the thickness of the safe conductive coating needs to be increased accordingly, thereby decreasing the energy density of the battery.

In any of embodiments, the foamable azo compound includes azodicarbonamide, azobisisobutyronitrile, and/or diisopropyl azodicarboxylate.

In any of embodiments, the core comprises azodicarbonamide, and a foaming temperature thereof after modification with zinc oxide and nitrourea is 100°C-210°C.

In any of embodiments, the core comprises azobisisobutyronitrile, and a foaming temperature thereof is 90°C-120°C.

In any of embodiments, the core comprises diisopropyl azodicarboxylate, and a foaming temperature thereof after activation with a lead salt is 100°C-240°C.

**In any of embodiments, the melamine resin is formed by polymerization of formaldehyde and melamine, and optionally, a weight ratio of formaldehyde to melamine is (2.5-3.5):(1.5-2.5).**

In any of embodiments, the shell has a thickness of 0.05-0.5 µm, optionally 0.1-0.2 µm.

In any of embodiments, the melamine resin has a softening temperature of 80°C-200°C, optionally 100°C-150°C.

In any of embodiments, a ratio of a weight of the melamine resin, optionally a sum of a weight of formaldehyde and a weight of melamine, to a weight of the foamable azo compound is 0.1-10, optionally 1-5.

A second aspect of the present application provides a method for preparing an expandable microbead, comprising:
step (1): preparing a prepolymerization solution of a melamine resin from formaldehyde and melamine, wherein optionally, the prepolymerization solution comprises formaldehyde, melamine, a solvent, and a prepolymer of formaldehyde and melamine, and more optionally, a solid content of the prepolymerization solution is 3-30%, optionally 10-25%;
step (2): preparing an emulsion from a foamable azo compound, wherein optionally, the foamable azo compound includes azodicarbonamide, azobisisobutyronitrile, and/or diisopropyl azodicarboxylate, and more optionally, a solid content of the emulsion is 2-20%, optionally 5-10%; and
step (3): preparing the expandable microbead from the prepolymerization solution in the step (1) and the emulsion in the step (2).

In any of embodiments, in the step (1), the prepolymerization solution is prepared from formaldehyde and melamine at a weight ratio of (2.5-3.5):(1.5-2.5).

In any of embodiments, in the step (1), a ratio of a sum of a weight of formaldehyde and a weight of melamine to a weight of the foamable azo compound is 0.1-10, optionally 1-5.

In any of embodiments, in the step (2), the emulsion is prepared from azodicarbonamide, and the emulsion further comprises zinc oxide and nitrourea; or, the emulsion is prepared from diisopropyl azodicarboxylate, and the emulsion further comprises a lead salt.

**In any of embodiments, in the step (3), the emulsion obtained in the step (2) is added into the prepolymerization solution obtained in the step (1) to obtain a mixed solution, which is adjusted to a pH of 3-6 for reaction for 1-6 h, and optionally, in this step, the melamine resin is obtained from polymerization of formaldehyde and melamine within a pH range of 3-6 at 30°C-50°C for 1-6 h.**

A third aspect of the present application provides an electrode plate, comprising a current collector and a safe conductive coating, wherein the safe conductive coating is coated on a part or whole of the current collector, the safe conductive coating comprises a conductive agent, an expandable microbead, a binder, and optionally a dispersant, wherein the expandable microbead has a core-shell structure, the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm, and optionally, the expandable microbead has a Dv50 of less than or equal to a thickness of the safe conductive coating.

The expandable microbead in the safe conductive coating of the electrode plate provided in the third aspect of the present application may be the expandable microbead provided in the first aspect of the present application or the expandable microbead prepared according to the method provided in the second aspect of the present application.

When a lithium-ion battery is used in a normal temperature range of below 70°C, the microbead in the safe conductive coating is stably coated on a surface of a positive electrode current collector or a negative electrode current collector without being involved in an electrochemical reaction between an active material and each of the current collectors, and the conductive agent is dispersed on a surface of the expandable microbead to form a conductive network around its vicinity. When an internal temperature of the battery exceeds the foaming temperature of the expandable microbead during abnormal battery temperature rise, the shell material melamine resin of the expandable microbead is softened, the foamable azo compound within the shell expands due to heat, the whole micrrosphere expands, the surface area becomes larger, and a distance between the conductive agent on the surface of the microbead becomes larger, direct contact is impossible, thereby blocking an electronic channel between each of the current collectors and the active material, and destroying the conductive network. **In** addition, since electronic migration and chemical reaction occur synchronously, after the electronic channel is destroyed, the chemical reaction also stops accordingly, and the battery stops energy release, thereby improving safety performance of the battery.

In any of embodiments, a mass proportion of the conductive agent is 20-70%, a mass proportion of the expandable microbead is 5-70%, optionally 10-50%, a mass proportion of the binder is 5-30%, and a mass proportion of the dispersant is 0-20%, based on a total mass of the safe conductive coating.

In any of embodiments, the safe conductive coating has a thickness of 0.2-10 µm, optionally 0.5-3 µm.

The thickness of the safe conductive coating of the present application is equivalent to that of a conventional safe conductive coating. Therefore, after addition of the expandable microbead in the first aspect of the present application, the safe conductive coating can greatly improve the safety performance of the battery without occupying the volume space of the active material and without reducing the volumetric energy density of the battery.

In any of embodiments, the conductive agent is carbon black, acetylene black, and/or Ketjen black.

The above conductive agent is used, so that the electrode plate in the present application has very good cost advantages.

In any of embodiments, the electrode plate further comprises an active material coating, which is coated on a surface of the safe conductive coating and/or the current collector, wherein the active material coating is a positive electrode active material coating or a negative electrode active material coating.

In any of embodiments, the conductive agent is of a same type as a conductive agent comprised in the active material coating.

A fourth aspect of the present application provides a method for preparing an electrode plate, comprising a step of coating a safe conductive liquid comprising the expandable microbead, the conductive agent, the binder, and optionally the dispersant on the part or whole of the current collector, wherein the expandable microbead has a core-shell structure, wherein the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm, and optionally, the expandable microbead has a Dv50 of less than or equal to a thickness of the safe conductive coating, and
optionally, the conductive agent is carbon black, acetylene black, and/or Ketjen black.

In any of embodiments, the step of coating the safe conductive liquid comprising the expandable microbead, the conductive agent, the binder, and optionally the dispersant on the part or whole of the current collector specifically comprises:
(1) dispersing the conductive agent, the expandable microbead, the binder, and optionally the dispersant at a weight ratio of (20-70%):(5-70%):(5-30%):(0-10%) in a solvent (e.g., NMP), and sufficiently stirring the resulting mixture, to provide a slurry with a solid content of 10-30%, and
(2) uniformly coating the slurry prepared in the step (1) on a surface of the part or whole of the current collector, optionally, with a coating thickness of 0.2-10 µm.

A fifth aspect of the present application provides a secondary battery, comprising a positive electrode plate, an electrolyte, and a negative electrode plate, wherein the positive electrode plate or the negative electrode plate comprises or is the electrode plate in the third aspect of the present application or the electrode plate prepared according to the method in the fourth aspect of the present application.

The second aspect of the present application provides a secondary battery, comprising the battery electrode plate in the first aspect of the present application.

### Description of Drawings

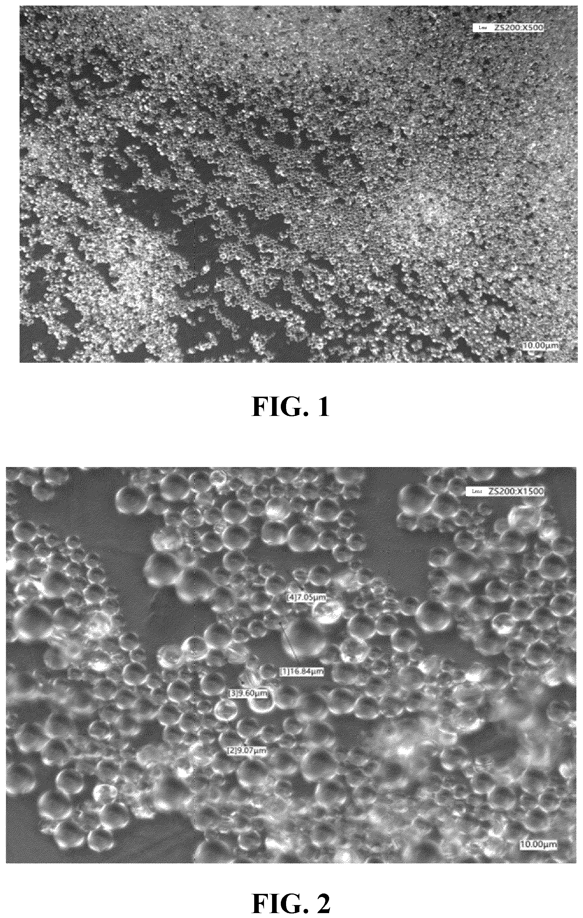

Fig. 1 is an enlarged electron microscope image of expandable microbeads before expansion in an embodiment of the present application, with a magnification of 500 times.
Fig. 2 is an enlarged electron microscope image of expandable microbeads before expansion in an embodiment of the present application, with a magnification of 1,500 times, wherein particle diameters of four microbeads are measured to be 16.84 µm, 9.07 µm, 9.60 µm, and 7.05 µm respectively, as shown by reference numerals in the figure.

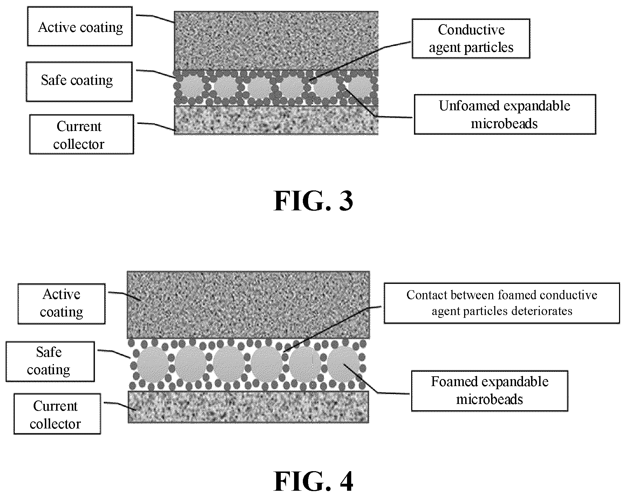

Fig. 3 is a schematic diagram of a battery electrode plate in an embodiment of the present application, wherein expandable microbeads are in an unexpanded state. As shown in the figure, the electrode plate comprises an upper active material layer, a lower current collector layer, and a middle safe conductive layer, large circles in the middle layer represent the expandable microbeads, and small circles around the large circle represent conductive agents.
Fig. 4 is a schematic diagram of expansion of the expandable microbeads in the battery electrode plate of Fig. 3, wherein the expandable microbeads are in an expanded state. As shown in the figure, the expandable microbeads after expansion are much larger than the expandable microbeads before expansion (see Fig. 3) (The large circles become larger), conductive agent particles around the microbeads become much thinner (the number of small circles becomes smaller), and the contact between the conductive agent particles deteriorates. It should be noted that density of the conductive agent particles in the figure becomes smaller because the surface area of the expandable microbeads after expansion becomes larger.

### Detailed Description

Embodiments of an electrode plate, a method for preparing the same, and a secondary battery in the present application are specifically disclosed below properly with reference to the detailed description of drawings. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limits and upper limits define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4, and 5 are listed, the following ranges are all contemplated: 1-3, 1-4, 1-5, 2- 3, 2-4, and 2-6. In the present application, unless stated otherwise, the numerical range "a-b" represents an abbreviated representation of any combination of real numbers between a to b, wherein both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), which means that the method may include steps (a) and (b) performed sequentially, or may include steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

Unless otherwise specifically stated, the terms "include/including" and "comprise/comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Lithium-ion batteries have been rapidly commercialized due to many advantages such as high energy density, long service life, and being environmentally friendly. However, safety issues have always been one of the pain points for large-scale promotion. When a lithium-ion battery is subjected to abnormal applications, such as impact, overcharge, or short circuit, energy inside the battery may be abnormally released, thereby resulting in self-heating of the battery, and enhancing internal pressure of the battery. The continued temperature rise will accelerate a series of exothermic side reactions inside the battery, thereby finally resulting in thermal runaway of the battery. How to prevent continued electrochemical reaction and sustained release of energy in an initial stage of thermal runaway of the lithium-ion battery is the key to solving the thermal runaway problem.

The present application solves the above problem by coating a safe conductive coating layer on the surface on the current collector of the positive electrode plate and/or the negative electrode plate. The safe conductive coating comprises an expandable microbead. When the battery overheats, the expandable microsphere in the coating thermally expands, to block the electronic channel between the surrounding active material and the current collector, thereby destroying the conductive network between the current collector and the active material, preventing further release of the battery energy, and then preventing thermal runaway of the battery.

Therefore, the first aspect of the present application provides a new expandable microbead, having a core-shell structure, wherein the shell comprises or consists of a melamine resin, and the core comprises a foamable azo compound.

The microbead consists of a nitrogen-containing polymer melamine resin as the shell and the foamable azo compound as the core. The foamable azo compound includes an azo compound foamable under a hot condition and/or a pressure condition, including azodicarbonamide, azobisisobutyronitrile, diisopropyl azodicarboxylate, or the like. Since the azo compound is not resistant to oxidation, and is easily oxidized during battery charging, the azo compound is wrapped as a core within the melamine resin to favorably isolate the battery environment from the azo compound, thereby avoiding its oxidation.

Compared with the microbead directly using a low-boiling point component as the core in the prior art, the azo compound serving as the core has the following advantages: the azo compound is decomposed under heat/pressure to produce small molecules, thereby promoting expansion, and producing greater driving force for expansion, more quickly separating the current collector from the active material layer when the battery temperature reaches a threshold, and contributing more to improving the safety performance.

Various materials in the expandable microbead of the present application can be validated by, e.g., scanning electron microscope (SEM), infrared (IR) chromatography, or nuclear magnetic resonance (NMR).

In some embodiments, the expandable microbead has an initial foaming temperature of 80°C-200°C, and an optimal initial foaming temperature of 100°C-150°C.

The initial foaming temperature refers to a temperature at which volume gain and expansion of the microbead begins, and mainly depends on the consistency between shell thickness and particle diameter of the microbead. Generally, the thicker the microbead shell is and the smaller the microbead volume is, the higher the temperature at which the expansion begins is. As used herein, the "foaming temperature" refers to the "initial foaming temperature".

Batteries usually need to experience a temperature of 80°C-100°C during production. In this process, the expandable microbead cannot expand, so that the initial foaming temperature of the microbead is most preferably higher than 100°C. In addition, when process conditions are satisfied, the lower initial foaming temperature of the microbead, the better. If the initial foaming temperature of the microbead is too high, the microbead neither can expand in time, nor can prevent abnormal discharge of the battery in time, during abnormal battery temperature rise, thereby failing to effectively improve the battery safety.

In some embodiments, the expandable microbead has a Dv50 of 0.2-10 µm, optionally 0.5-5 µm, and optionally, the expandable microbead has a Dv50 of less than or equal to a thickness of the safe conductive coating.

The median particle diameter Dv₅₀herein refers to a corresponding particle diameter when a cumulative particle diameter distribution percentage of microbeads reaches 50%. Its physical meaning is that 50% of the microbeads have a particle diameter larger than it, and 50% of the microbeads have a particle diameter smaller than it. D50 is also called median diameter or median size. The median diameter Dv₅₀ of the microbeads can be determined by laser diffraction particle size analysis, for example, determined using a laser particle size analyzer (such as Mastersizer 2000E) with reference to the standard GB/T 19077-2016.

A particle diameter of the expandable microbead within the above range can ensure that the microbead has enough foaming capacity, and has enough influence on conductivity of the safe conductive coating during expansion, thereby improving the battery safety. The particle diameter of the expandable microbead should not be too large, and otherwise, the thickness of the safe conductive coating needs to be increased accordingly, thereby decreasing the energy density of the battery.

In an optional embodiment, the Dv50 of the expandable microbead is less than or equal to the thickness of the safe conductive coating, and the thickness here is the thickness of the safe conductive coating after drying.

It should be understood that the expandable microbead of the present application can be used not only in lithium batteries, but also in any other application scenario where thermal runaway needs to be prevented.

In some embodiments, the foamable azo compound includes azodicarbonamide, azobisisobutyronitrile, and/or diisopropyl azodicarboxylate.

In some embodiments, the core comprises azodicarbonamide, and a foaming temperature thereof after modification with zinc oxide and nitrourea is 100°C-210°C.

In the present application, the foaming temperature of the core is basically very close to the expansion temperature of the microbead. Therefore, the foaming temperature of the core can be regarded as substantially equal to the foaming temperature of the microbead.

In some embodiments, the core comprises azobisisobutyronitrile, and a foaming temperature thereof is 90°C-120°C.

In some embodiments, the core comprises diisopropyl azodicarboxylate, and a foaming temperature thereof after activation with a lead salt is 100°C-240°C.

In some embodiments, the melamine resin is formed by polymerization of formaldehyde and melamine, and optionally, a weight ratio of formaldehyde to melamine is (2.5-3.5):(1.5-2.5).

The above melamine resin can be softened at an appropriate temperature (for example, a temperature higher than a normal temperature of the battery). When the foamable azo compound foams and expands, the volume of the melamine resin can increase accordingly, to achieve a desired expansion degree.

It should be understood that during expansion, no matter whether the shell of the melamine resin is broken or not, it will not affect functioning of the expandable microbead.

It should also be understood that the above melamine resin is only a preferred choice, and does not impose any limitation on the present application.

In some embodiments, the shell has a thickness of 0.05-0.5 µm, optionally 0.1-0.2 µm.

In some embodiments, the melamine resin has a softening temperature of 80°C-200°C, optionally 100°C-150°C.

In some embodiments, a ratio of a weight of the melamine resin, optionally a sum of a weight of formaldehyde and a weight of melamine, to a weight of the foamable azo compound is 0.1-10, optionally 1-5.

A second aspect of the present application provides a method for preparing an expandable microbead, comprising:
step (1): preparing a prepolymerization solution of the melamine resin from formaldehyde and melamine, wherein optionally, the prepolymerization solution comprises formaldehyde, melamine, a solvent, and a prepolymer of formaldehyde and melamine, and more optionally, a solid content of the prepolymerization solution is 3-30%, optionally 10-25%;
step (2): preparing an emulsion from a foamable azo compound, wherein optionally, the foamable azo compound includes azodicarbonamide, azobisisobutyronitrile, and/or diisopropyl azodicarboxylate, and more optionally, a solid content of the emulsion is 2-20%, optionally 5-10%; and
step (3): preparing the expandable microbead from the prepolymerization solution in the step (1) and the emulsion in the step (2).

In the step (1), the prepolymerization solution may be adjusted to a weakly alkalic pH, for example, within a range of 7-9, to terminate the polymerization of formaldehyde and melamine. In addition, formaldehyde and melamine may be partially polymerized in the step (1).

In some embodiments, in the step (1), the prepolymerization solution is prepared from formaldehyde and melamine at a weight ratio of (2.5-3.5):(1.5-2.5).

In some embodiments, in the step (1), a ratio of a sum of a weight of formaldehyde and a weight of melamine to a weight of the foamable azo compound is 0.1-10, optionally 1-5.

In some embodiments, in the step (2), the emulsion is prepared from azodicarbonamide, and the emulsion further comprises zinc oxide and nitrourea; or, the emulsion is prepared from diisopropyl azodicarboxylate, and the emulsion further comprises a lead salt.

In some embodiments, in the step (3), the emulsion obtained in the step (2) is added into the prepolymerization solution obtained in the step (1) to obtain a mixed solution, which is adjusted to a pH of 3-6 for reaction for 1-6 h, and optionally, in this step, the melamine resin is obtained from polymerization of formaldehyde and melamine within a pH range of 3-6 at 30°C-50°C for 1-6 h.

The pH is adjusted to 3-6 to promote further polymerization of formaldehyde and melamine.

In principle, polymerization of the melamine resin is not limited in the present application, as long as the core-shell structure of the expandable microbead can be achieved. Optionally, in the present application, the polymerization of the melamine resin is achieved in two steps: first, preparing the prepolymerization solution from formaldehyde and melamine, and then, after mixing with the emulsion of the azo compound, further completing the polymerization reaction under a weakly acidic condition, for example, at a pH of 3-6.

In the above method, the emulsification speed can be adjusted to adjust the final desired Dv50 particle diameter.

When azodicarbonamide is used as the core material, a corresponding microbead foaming temperature can be obtained by adjusting the proportions of zinc oxide and nitrourea.

When azobisisobutyronitrile is used as the core material, the corresponding microbead foaming temperature can be obtained by regulation according to methods of existing technologies in the art.

When diisopropyl azodicarboxylate is used as the core material, the corresponding microbead foaming temperature can be obtained by adjusting the type and use amount of the lead salt.

The Examples may be referred to for the detailed method for preparing an expandable microbead. In the present application, the sequence of the steps (1) and (2) is not limited. The step (1) may be first implemented and then the step (2) is implemented, or the step (2) can be first implemented and then the step (1) is implemented.

A third aspect of the present application provides an electrode plate, comprising a current collector and a safe conductive coating, wherein the safe conductive coating is coated on a part or whole of the current collector, the safe conductive coating comprises a conductive agent, an expandable microbead, a binder, and optionally a dispersant, wherein the expandable microbead has a core-shell structure, the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm, and optionally, the expandable microbead has a Dv50 of less than or equal to a thickness of the safe conductive coating.

The expandable microbead in the safe conductive coating of the electrode plate provided in the third aspect of the present application may be the expandable microbead provided in the first aspect of the present application or the expandable microbead prepared according to the method provided in the second aspect of the present application.

When a lithium-ion battery is within a normal temperature range of below 70°C, the microbead in the safe conductive coating is stably coated on a surface of a positive electrode current collector or a negative electrode current collector without being involved in an electrochemical reaction between an active material and each of the current collectors, and the conductive agent in the safe conductive coating is dispersed on a surface of the expandable microbead to form a conductive network around its vicinity, as shown in Fig. 3. When an internal temperature of the battery exceeds the foaming temperature of the expandable microbead during abnormal battery temperature rise, the shell material melamine resin of the expandable microbead is softened, the foamable azo compound within the shell expands due to heat, the whole microsphere expands, the surface area becomes larger, and a distance between the conductive agent on the surface of the microbead becomes farther, so that direct contact is impossible, thereby blocking an electronic channel between each of the current collectors and the active material, and destroying the conductive network, as shown in Fig. 4. **In** addition, since electronic migration and chemical reaction occur synchronously, after the electronic channel is destroyed, the chemical reaction also stops accordingly, and the battery stops energy release, thereby improving safety performance of the battery.

When the electrode plate in the present application is immersed in water, since the density of the microbead is lower than the density of water, the microbead is very easy to float. The supernatant liquid material is removed, washed, filtered, and then validated by SEM, IR, and NMR to determine the material of the microbead in the present application.

In the present application, the description of the microbead also applies to the method for preparing a microbead, and the microbead in the electrode plate, and vice versa.

In some embodiments, a mass proportion of the conductive agent is 20-70%, a mass proportion of the expandable microbead is 5-70%, optionally 10-50%, a mass proportion of the binder is 5-30%, and a mass proportion of the dispersant is 0-20%, based on a total mass of the safe conductive coating.

In the present application, the terms "mass proportion" and "weight proportion" are used synonymously; and "by mass of ..." and "by mass of ..." are used synonymously.

In some embodiments, the safe conductive coating has a thickness of 0.2-10 µm, optionally 0.5-3 µm.

The thickness of the safe conductive coating of the present application is equivalent to that of a conventional safe conductive coating. Therefore, after addition of the expandable microbead in the first aspect of the present application, the safe conductive coating can greatly improve the safety performance of the battery without occupying the volume space of the active material and without reducing the volumetric energy density of the battery.

Here, the coating thickness is the thickness of the safe conductive coating after drying.

The conductive agent in the safe conductive coating may be any conductive agent used in the art. In some embodiments, the conductive agent is carbon black, acetylene black, and/or Ketjen black.

In the safe conductive coating in the present application, the conductive agent may be low-cost carbon black, such as Super P, or may be acetylene black or Ketjen black. The above conductive agent is used, so that the electrode plate in the present application has very good cost advantages.

The binder in the safe conductive coating may be any binder used in the art. In some optional embodiments, the binder is acrylic acid, acrylate, or a copolymer of the two.

The dispersant in the safe conductive coating may be any dispersant used in the art. In some optional embodiments, the dispersant is polyvinyl alcohol and/or polyvinylpyrrolidone.

The electrode plate in the present application can be used in secondary batteries, especially lithium secondary batteries. When the electrode plate serves as a positive electrode of the secondary battery, the current collector may be a positive electrode current collector, and a positive electrode active material may be coated on the safe coating of the electrode plate. When the electrode plate serves as a negative electrode of the secondary battery, the current collector may be a negative electrode current collector, and a negative electrode active material may be coated on the safe coating of the electrode plate. Therefore, in some embodiments, the electrode plate further comprises an active material coating, which is coated on a surface of the safe conductive coating and/or the current collector, wherein the active material coating is a coating comprising the positive electrode active material for a secondary battery or a coating comprising the negative electrode active material for a secondary battery.

The positive electrode active material or the negative electrode active material is any positive electrode active material or negative electrode active material used in the art.

In some optional embodiments, the active material coating is a positive electrode active material coating, comprising a positive electrode active material, a positive electrode conductive agent, and a positive electrode binder.

The active material coating is a positive electrode active material coating, comprising a positive electrode active material, a positive electrode conductive agent, and a positive electrode binder; or
the active material coating is a negative electrode active material coating, comprising a negative electrode active material, a negative electrode conductive agent, and a negative electrode binder.

In some optional embodiments, the active material coating is a negative electrode active material coating, comprising a negative electrode active material, a negative electrode conductive agent, and a negative electrode binder.

In some embodiments, the conductive agent in the safe conductive coating is of a same type as a conductive agent comprised in the active material coating. Therefore, the conductivity of the safe conductive coating and the conductivity of the active material coating, as well as the conductivity between the safe conductive coating and the active material coating, tend to be consistent, thereby contributing to smooth conduction of electrons.

In some optional embodiments, the current collector is a copper foil or an aluminum foil, and optionally, when the current collector is a copper foil, its thickness is 3-10 µm; and when the current collector is an aluminum foil, its thickness is 5-20 µm.

A fourth aspect of the present application provides a method for preparing an electrode plate, comprising a step of coating a safe conductive liquid comprising the expandable microbead, the conductive agent, the binder, and optionally the dispersant on the part or whole of the current collector, wherein the expandable microbead has a core-shell structure, wherein the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm, and optionally, the expandable microbead has a Dv50 of less than or equal to a thickness of the safe conductive coating, and
optionally, the conductive agent is carbon black, acetylene black, and/or Ketjen black.

The method for preparing an electrode plate provided in the present application is suitable for preparing the electrode plate in the third aspect of the present application. The above descriptions of the expandable microbead, the conductive agent, the binder, and the dispersant are also applicable to this method.

In some embodiments, the step of coating the safe conductive liquid comprising the expandable microbead, the conductive agent, the binder, and optionally the dispersant on the part or whole of the current collector specifically includes:
(1) dispersing the conductive agent, the expandable microbead, the binder, and optionally the dispersant at a weight ratio of (20-70%):(5-70%):(5-30%):(0-10%) in a solvent (e.g., NMP), and sufficiently stirring the resulting mixture, to provide a slurry with a solid content of 10-30%, and
(2) uniformly coating the slurry prepared in the step (1) on a surface of the part or whole of the current collector, optionally, with a coating thickness of 0.2-10 µm.

Finally, drying is performed, optionally by baking dry.

Optionally, the method for preparing an electrode plate further includes coating a slurry comprising a positive electrode active material or a slurry comprising a negative electrode active material on the above safe conductive coating and/or the current collector.

The electrode plate in the present application can be made into a positive electrode plate or a negative electrode plate. When the electrode plate is coated with the positive electrode active material, it is the positive electrode plate, while when the electrode plate is coated with a negative electrode active material, it is the negative electrode plate.

A fifth aspect of the present application provides a secondary battery, comprising a positive electrode plate, an electrolyte, and a negative electrode plate, wherein the positive electrode plate or the negative electrode plate comprises or is the electrode plate in the third aspect of the present application or the electrode plate prepared according to the method in the fourth aspect of the present application.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate comprises a positive electrode current collector and a positive electrode film layer arranged on at least one surface of the positive electrode current collector. In the present application, the positive electrode film layer is also called positive electrode active material coating.

Optionally, the positive electrode plate comprises a positive electrode current collector, the above safe conductive coating, and a positive electrode film layer, wherein the safe conductive coating is coated on the part or whole of the positive electrode current collector, and the positive electrode film layer is coated on the above safe conductive coating and/or positive electrode current collector.

In some embodiments, the positive electrode current collector may be a metal foil or a composite current collector. For example, an aluminum foil can be used as the metal foil. The composite current collector can comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a positive electrode binder. As an example, the positive electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally comprises a positive electrode conductive agent. As an example, the positive electrode conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above ingredients, such as the positive electrode active material, the conductive agent, the binder, and any other ingredient, for preparing the positive electrode plate in a solvent (such as N-methyl pyrrolidone) to form a positive electrode slurry; and coating the positive electrode slurry on the positive electrode current collector, drying, and cold pressing, to obtain the positive electrode plate.

### [Negative electrode plate]

The negative electrode plate comprises a negative electrode current collector and a negative electrode film layer arranged on at least one surface of the negative electrode current collector. In the present application, the negative electrode film layer is also called negative electrode active material coating.

Optionally, the negative electrode plate comprises a negative electrode current collector, the above safe conductive coating, and a negative electrode film layer, wherein the safe conductive coating is coated on the part or whole of the positive electrode current collector, and the positive electrode film layer is coated on the above safe conductive coating and/or positive electrode current collector.

In some embodiments, the negative electrode current collector may be a metal foil or a composite current collector. For example, a copper foil can be used as the metal foil. The composite current collector may comprise a high molecular material substrate layer and a metal layer formed on at least one surface of a high molecular material substrate. The composite current collector can be formed by forming a metal material (copper, copper alloy, nickel, nickel alloy, titanium, titanium alloy, silver, and silver alloy, etc.) on a high molecular material substrate (e.g., polypropylene (PP), polyethylene terephthalate (PET), polybutylene terephthalate (PBT), polystyrene (PS), polyethylene (PE), etc.).

In some embodiments, a negative electrode active material for a battery well-known in the art may be used as the negative electrode active material. As an example, the negative electrode active material may include at least one of artificial graphite, natural graphite, soft carbon, hard carbon, a silicon-based material, a tin-based material, lithium titanate, and the like. The silicon-based material may be at least one selected from the group consisting of elemental silicon, silicon-oxygen complex, silicon-carbon complex, silicon-nitrogen complex, and silicon alloy. The tin-based material may be at least one selected from elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a negative electrode binder. The negative electrode binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a negative electrode conductive agent. The negative electrode conductive agent may be at least one selected from the group consisting of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above ingredients, such as the negative electrode active material, the conductive agent, the binder, and any other ingredient, for preparing the negative electrode plate in a solvent (such as deionized water) to form a negative electrode slurry; and coating the negative electrode slurry on the negative electrode current collector, drying, and cold pressing, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be at least one selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multilayer composite film, the material in each layer may be identical or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and an electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic include polypropylene, polybutylene terephthalate polybutylene succinate, and the like.

The shape of the secondary battery is not particularly limited in the present application, and may be a cylinder, a square, or any other shape.

### Examples

Examples of the present application will be described below. The examples described below are illustrative, are merely used to explain the present application, and should not be construed as limiting the present application. The examples in which techniques or conditions are not specified are based on the techniques or conditions described in documents in the art or according to the product instructions. Where manufacturers are not specified, the reagents or instruments used are conventional products and are commercially available.

### Example 1

### 1. Preparation of a microbead

step 1): adding 8 g of an azodicarbonamide complex comprising azodicarbonamide, zinc oxide, and nitrourea at a weight ratio of 98:3:5 into a flask, then adding 0.55 g of Span-80 emulsifier and 100 ml of distilled water, and emulsifying the mixture by stirring at a high speed of 2,500 r/min for 10 min to provide an emulsion.

step 2): sufficiently stirring 10 g of melamine, 15 g of formaldehyde, and 100 ml of water in a flask, heating the reaction mixture to 75°C while stirring at 500 r/min, keeping the mixture at the temperature for 0.5 h, then adjusting the mixture with triethanolamine to a PH value of 8, and continuing to keep the mixture at the temperature of 75°C at a revolving speed of 500 r/min until a transparent prepolymerization solution is obtained.

step 3): cooling the transparent prepolymerization solution obtained in the step 2) to 40°C, slowly pouring the emulsion obtained in the step 1) into it at a stirring speed of 1,000 r/min, stirring the mixture at a controlled stirring speed of about 1,000 r/min for 0.5 h, then adjusting the mixture with 15 wt% aqueous citric acid to a PH value of 4.5, continuing stirring at a controlled stirring speed of about 1,000 r/min for an additional 3 h, filtering, and drying at 60°C for 8 h to provide an expandable microbead having a Dv50 of 1 µm as determined using Malvern Mastersizer 2000E and having a foaming temperature of 80°C as determined by scanning calorimetry. The Dv50 and the foaming temperature of all expandable microbeads in each example were determined using the above methods.

### 2. Preparation of a safe conductive coating

The conductive agent carbon black, the expandable microbeads obtained in 1, acrylate, and polyvinylpyrrolidone at a weight ratio of 50%:40%:9.5%:0.5% were dispersed in NMP. The mixture was sufficiently stirred to form a slurry with a solid content of 20%, and the resulting slurry was uniformly coated on a surface of an aluminum foil, which was dried with the coating amount after drying of 2 g/m².

### (3) Preparation of a positive electrode plate

Lithium nickel cobalt manganese oxide, conductive carbon black, and polyvinylidene fluoride at a ratio of 97%:2%:1% were dispersed in N-methyl pyrrolidone, the mixture was sufficiently stirred to form a slurry with a solid content of 72%, and then the slurry was uniformly coated on a surface of the above safe conductive coating with a coating weight of 214 g/m², which was dried, cold pressed, and die cut, to provide the positive electrode plate.

### 4. Preparation of a negative electrode plate

Graphite, conductive carbon black, sodium carboxymethylcellulose, and polystyrene butadiene rubber at a ratio of 96%:1%:1%:2% were dispersed in deionized water, the mixture was sufficiently stirred to form a slurry with a solid content of 51%, and then the slurry was uniformly coated on a surface of a 6 µm thick copper foil with a coating weight of 135g/m², which was dried, cold pressed, and die cut, to provide the negative electrode plate.

### 5. Separator

A 9 µm PE base film purchased from Energy New Material Co., Ltd was used as the separator.

### 6. Preparation of a lithium-ion battery

The resulting positive electrode plate, separator, and negative electrode plate were winded into a battery cell, which was made into the lithium-ion battery after liquid injection, formation, and capacity detection.

### Examples 2-15

The examples are similar to Example 1, except that the particle diameter and the foaming temperature of the expandable microbead are those in Table 1. Specifically, when the expandable microbead was prepared, the emulsification speed was adjusted to obtain a corresponding particle diameter; and the proportions of zinc oxide and nitrourea in the azodicarbonamide complex were adjusted to obtain a corresponding foaming temperature.

### Example 16

The example is similar to Example 1, except that the core material used for preparing the expandable microbead is azobisisobutyronitrile, and the foaming temperature is adjusted to 150°C.

### Example 17

The example is similar to Example 1, except that the core material used for preparing the expandable microbead is diisopropyl azodicarboxylate, and the foaming temperature is adjusted to 120°C.

### Examples 18-23

The examples are similar to Example 1, except for the weight proportion of the expandable microbead in the preparation of the safe conductive coating, details as per Table 1 below.

### Comparative Example 1

The comparative example is similar to Example 1, except that the expandable microbead is not used in the preparation of the safe conductive coating, for which the preparation method specifically includes:
dispersing the conductive agent carbon black, polyvinylidene fluoride, and polyvinylpyrrolidone at a weight ratio of 82%:15%:3% in NMP, sufficiently stirring the mixture to form a slurry with a solid content of 10%, and uniformly coating the resulting slurry on a surface of an aluminum foil with the coating amount of 2 g/m².

### Performance test

### 1. Maximum temperature of lithium-ion battery

The maximum temperature of the lithium-ion batteries prepared in each example and the comparative example was determined by testing three lithium-ion batteries in each example and the comparative example respectively according to the national standard GB/T 31486-2015 Electrical performance requirements and test methods for traction battery of electric vehicle.

### 2. Safety performance test

Acupuncture experiments were performed on the three lithium-ion batteries provided in each example and the comparative example, specifically as follows:

first, each of the batteries was charged to 4.2V at a constant current of 5A, and then charged at a constant voltage of 4.2V until the current was reduced to 0.25A; a high temperature resistant steel needle with a diameter of 6 mm and with a conicity of 50° at the needle tip was made to penetrate through in a direction perpendicularly to the battery electrode plate at a speed of 25 mm/s, at a penetration position near the geometric center of the punctured battery surface, the steel needle stayed in the battery and was observed for 1 h; if sparks were generated, it was ascertained as "fire," and otherwise, it was ascertained as "no fire"; if solid substances were ejected, it was ascertained as "explosion," and otherwise, it was ascertained as "no explosion," thus determining the safety of the lithium-ion battery provided in each example and the comparative example.

### The test results are detailed in Table 1 below.

It should be understood that the maximum temperature of the lithium-ion battery determined in 1 reflects the amount of energy released by the battery when it is subjected to the safety performance test (acupuncture destructive test) in 2. The lower the maximum temperature of the lithium-ion battery is, the smaller the amount of energy released by the battery is, and the better the battery safety is.

**Table 1**

| Serial No. | Expandable microbead | | | Weight proportion of expandable microbead in safe conductive coating | Maximum temperature of battery cell/°C | | | Safety performance No fire, no explosion |
|---|---|---|---|---|---|---|---|---|
| | Core material | Particle diameter µm | Foaming temperature °C | 50% | 1# | 2# | 3# | |
| Example 1 | Azodicarbonamide | 0.1 | 80 | 50% | 338 | 342 | 515 | 2 OK, 1 NG |
| Example 2 | Azodicarbonamide | 0.2 | 80 | 50% | 263 | 257 | 267 | 3 OK |
| Example 3 | Azodicarbonamide | 0.5 | 80 | 50% | 207 | 202 | 213 | 3 OK |
| Example 4 | Azodicarbonamide | 1 | 80 | 50% | 142 | 147 | 136 | 3 OK |
| Example 5 | Azodicarbonamide | 5 | 80 | 50% | 106 | 112 | 103 | 3 OK |
| Example 6 | Azodicarbonamide | 10 | 80 | 50% | 109 | 114 | 119 | 3 OK |
| Example 7 | Azodicarbonamide | 0.5 | 150 | 50% | 235 | 228 | 223 | 3 OK |
| Example 8 | Azodicarbonamide | 1 | 150 | 50% | 163 | 156 | 168 | 3 OK |
| Example 9 | Azodicarbonamide | 5 | 150 | 50% | 128 | 133 | 125 | 3 OK |
| Example 10 | Azodicarbonamide | 0.5 | 200 | 50% | 294 | 525 | 325 | 2 OK, 1 NG |
| Example 11 | Azodicarbonamide | 1 | 200 | 50% | 271 | 288 | 311 | 3 OK |
| Example 12 | Azodicarbonamide | 5 | 200 | 50% | 231 | 257 | 261 | 3 OK |
| Example 13 | Azodicarbonamide | 0.5 | 240 | 50% | 542 | 613 | 576 | 3NG |
| Example 14 | Azodicarbonamide | 1 | 240 | 50% | 554 | 537 | 564 | 3 NG |
| Example 15 | Azodicarbonamide | 5 | 240 | 50% | 363 | 518 | 531 | 1 OK, 2 NG |
| Example 16 | Azobisisobutyronitrile | 5 | 150 | 50% | 134 | 138 | 142 | 3 OK |
| Example 17 | Diisopropyl azodicarboxylate | 5 | 120 | 50% | 115 | 112 | 118 | 3 OK |
| Example 18 | Azodicarbonamide | 5 | 150 | 5% | 341 | 471 | 163 | 1 OK, 2 NG |
| Example 19 | Azodicarbonamide | 5 | 150 | 10% | 143 | 159 | 332 | 2 OK, 1 NG |
| Example 20 | Azodicarbonamide | 5 | 150 | 50% | 128 | 107 | 161 | 3 OK |
| Example 21 | Azodicarbonamide | 5 | 150 | 70% | 131 | 147 | 122 | 3 OK |
| Example 22 | Azodicarbonamide | 5 | 150 | 3% | 443 | 479 | 496 | 3NG |
| Example 23 | Azodicarbonamide | 5 | 150 | 80% | 161 | 159 | 147 | 3 OK |
| Comparative Example 1 | \ | \ | \ | | 563 | 579 | 592 | 3 NG |

| | | | | | | | | |
|---|---|---|---|---|---|---|---|---|
| (Note: The number in the Safety performance column in Table 1 is the number of tested batteries, and 3 battery cells are tested in each example, where there are 3 OK when the safety test results of 3 battery cells are all "No fire, no explosion"; there are 2 OK and 1 NG when the safety test results of two battery cells are "No fire, no explosion," and the safety test result of one battery cell is "Fire and/or explosion"; there is 1 OK and 2 NG when the safety test result of one battery cell is "No fire, no explosion," and the safety test results of two battery cells are "Fire and/or explosion"; and there are 3 NG when the safety test results of 3 battery cells are all "Fire and/or Explosion.") | | | | | | | | |

As can be seen from the comparison between each example and Comparative Example 1 in Table 1, the positive electrode current collector is coated with the safe conductive coating comprising the expandable microbead of the present application, so that the safety performance of the resulting lithium secondary battery is improved. It is now believed that this is due to the following reasons: after the safe conductive coating is added onto the surface of the aluminum foil, the expandable microbead expands after the battery temperature rise, thus destroying the contact between the conductive agent particles, so that the conductivity between the positive electrode current collector and the positive electrode active material becomes worse, thereby reducing the energy released by the battery, obviously reducing the maximum temperature of acupuncture, and obviously improving the safety.

As can be seen from Examples 1-3, the larger the particle diameter of the expandable microbead in the conductive coating is, the greater the expansion rate of the microbead is, thus better destroying the contact between the conductive agent particles in the safe conductive coating, and better improving the safety performance of the battery. In addition, after the particle diameter of the expandable microbead in the conductive coating reaches 0.5 µm (Example 5), the expansion rate of the microbead increases significantly, which is more effective in improving the battery safety. However, a very large particle diameter (larger than 10 µm in Example 6) cannot decrease the acupuncture temperature of the microbead, and a very large particle diameter means increase of the coating thickness, thereby occupying additional space of the electrode plate, and reducing the energy density of the battery. Therefore, the optimal particle diameter of the expandable microbead is 0.2 µm-10 µm.

As can be seen from Examples 3-5 and Examples 7-15, the safety performance of the battery is associated with the particle diameter and the foaming temperature of the expandable microbead. When the foaming temperature is below 200°C and the particle diameter is larger than 0.1 µm, optionally above 0.5 µm, the battery has better safety performance. This is because: when the foaming temperature of the expandable microbead is very high, the safe conductive coating can function only when the battery temperature rises to a very high level, so that it functions later, which is more detrimental to improving the safety performance of the battery. In addition, a very low foaming temperature of the expandable microbead may have an adverse effect on the battery processing. For example, the coating temperature and baking process temperature of the positive electrode plate are both around 100°C, and the foaming temperature of the expandable microbead of below 100°C may affect the production process, reduce the production efficiency, and may further cause the expandable microbead to expand prematurely during the processing of the electrode plates, which will not only fail to improve the safety, but also may increase the internal resistance of the battery, and reduce the power performance of the battery. Therefore, the optimal foaming temperature of the expandable microbead is 100-150°C.

As can be seen from Examples 16 and 17, use of azobisisobutyronitrile and diisopropyl azodicarboxylate as the core of the expandable microbead can also make the expandable microbead function to improve the safety performance of the battery. In particular, batteries using diisopropyl azodicarboxylate with a relatively low foaming temperature have a lower maximum temperature of acupuncture, earlier battery shutoff time, and more obvious improvement of the battery safety. It should be understood that in the present application, the azo compound in the expandable microbead is not limited to the compounds used in the examples. As long as an azo compound has a foaming temperature (no matter whether it is adjusted or not) within the range herein, the azo compound is encompassed within the range of the inventive concept of the present application, and can be used for the expandable microbead of the present application.

As can be seen from Examples 18-23, when the content of the expandable microbead in the safe conductive coating is lower than 10%, the battery safety is not improved at all. The lower the content of the expandable microbead is, the worse the safety performance of the battery is. Therefore, the content of the expandable microbead in the safe conductive coating is 5-80%. In addition, the higher the content of the expandable microbead is, the more obviously the safety performance of the battery is improved. However, a very high content of the expandable microbead will increase the DC resistance of the battery, and affect the conventional performance of the battery, and therefore is not an optimal choice. Therefore, the content of the expandable microbead in the safe conductive coating is optionally 10-70%, and is more optionally 15-60%.

It should be understood that although the expandable microbead is used to prepare a positive electrode plate in the examples of the present application, the present application is not limited to the expandable microbead, the expandable microbead in the present application may also be used to prepare a negative electrode plate, and the electrode plate in the present application may also be used to make a negative electrode plate. Regardless of the positive electrode plate or the negative electrode plate, the expandable microbead and the electrode plate in the present application can have same or similar functions.

It should also be understood that the expandable microbead and the electrode plate in the present application are not only suitable for lithium secondary batteries, but also suitable for sodium secondary batteries.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived of by those skilled in the art and are applied to the embodiments, and other embodiments constructed by combining some of the constituent elements of the embodiments are also encompassed within the scope of the present application.

## Claims

1. An expandable microbead, having a core-shell structure, wherein the shell comprises or consists of a melamine resin, and the core comprises a foamable azo compound.

2. The expandable microbead according to claim 1, wherein the expandable microbead has an initial foaming temperature of 80°C-200°C, and an optimal initial foaming temperature of 100°C-150°C.

3. The expandable microbead according to claim 1 or 2, wherein the expandable microbead has a Dv50 of 0.2-10 µm, optionally 0.5-5 µm, and optionally, the expandable microbead has a Dv50 of less than or equal to a thickness of a safe conductive coating.

4. The expandable microbead according to any one of claims 1-3, wherein the foamable azo compound includes azodicarbonamide, azobisisobutyronitrile, and/or diisopropyl azodicarboxylate.

5. The expandable microbead according to any one of claims 1-4, wherein the core comprises azodicarbonamide, and a foaming temperature thereof after modification with zinc oxide and nitrourea is 100°C-210°C.

6. The expandable microbead according to any one of claims 1-5, wherein the core comprises azobisisobutyronitrile, and a foaming temperature thereof is 90°C-120°C.

7. The expandable microbead according to any one of claims 1-6, wherein the core comprises diisopropyl azodicarboxylate, and a foaming temperature thereof after activation with a lead salt is 100°C-240°C.

8. The expandable microbead according to any one of claims 1-7, wherein the melamine resin is formed by polymerization of formaldehyde and melamine, and optionally, a weight ratio of formaldehyde to melamine is (2.5-3.5):(1.5-2.5).

9. The expandable microbead according to any one of claims 1-8, wherein the shell has a thickness of 0.05-0.5 µm, optionally 0.1-0.2 µm.

10. The expandable microbead according to any one of claims 1-9, wherein the melamine resin has a softening temperature of 80°C-200°C, optionally 100°C-150°C.

11. The expandable microbead according to any one of claims 1-10, wherein a ratio of a weight of the melamine resin, optionally a sum of a weight of formaldehyde and a weight of melamine, to a weight of the foamable azo compound is 0.1-10, optionally 1-5.

12. A method for preparing an expandable microbead, comprising:
step (1): preparing a prepolymerization solution of a melamine resin from formaldehyde and melamine, wherein optionally, the prepolymerization solution comprises formaldehyde, melamine, a solvent, and a prepolymer of formaldehyde and melamine, and more optionally, a solid content of the prepolymerization solution is 3-30%, optionally 10-25%;
step (2): preparing an emulsion from a foamable azo compound, wherein optionally, the foamable azo compound includes azodicarbonamide, azobisisobutyronitrile, and/or diisopropyl azodicarboxylate, and more optionally, a solid content of the emulsion is 2-20%, optionally 5-10%; and
step (3): preparing the expandable microbead from the prepolymerization solution in the step (1) and the emulsion in the step (2).

13. The method for preparing an expandable microbead according to claim 12, wherein in the step (1), the prepolymerization solution is prepared from formaldehyde and melamine at a weight ratio of (2.5-3.5):(1.5-2.5).

14. The method for preparing an expandable microbead according to claim 12 or 13, wherein in the step (1), a ratio of a sum of a weight of formaldehyde and a weight of melamine to a weight of the foamable azo compound is 0.1-10, optionally 1-5.

15. The method for preparing an expandable microbead according to any one of claims 12-14, wherein in the step (2), the emulsion is prepared from azodicarbonamide, and the emulsion further comprises zinc oxide and nitrourea; or, the emulsion is prepared from diisopropyl azodicarboxylate, and the emulsion further comprises a lead salt.

16. The method for preparing an expandable microbead according to any one of claims 12-15, wherein in the step (3), the emulsion obtained in the step (2) is added into the prepolymerization solution obtained in the step (1) to obtain a mixed solution, which is adjusted to a pH of 3-6 for reaction for 1-6 h, and optionally, in this step, the melamine resin is obtained from polymerization of formaldehyde and melamine within a pH range of 3-6 at 30°C-50°C for 1-6 h.

17. An electrode plate, comprising a current collector and a safe conductive coating, wherein the safe conductive coating is coated on a part or whole of the current collector, the safe conductive coating comprises a conductive agent, an expandable microbead, a binder, and optionally a dispersant, wherein the expandable microbead has a core-shell structure, the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm, and more optionally, the expandable microbead has a Dv50 of less than or equal to a thickness of the safe conductive coating.

18. The electrode plate according to claim 17, wherein,
a mass proportion of the conductive agent is 20-70%, a mass proportion of the expandable microbead is 5-70%, optionally 10-50%, a mass proportion of the binder is 5-30%, and a mass proportion of the dispersant is 0-20%, based on a total mass of the safe conductive coating.

19. The electrode plate according to claim 17 or 18, wherein,
the safe conductive coating has a thickness of 0.2-10 µm, optionally 0.5-3 µm.

20. The electrode plate according to any one of claims 17-19, wherein,
the conductive agent is carbon black, acetylene black, and/or Ketjen black.

21. The electrode plate according to any one of claims 17-20, wherein,
the electrode plate further comprises an active material coating, which is coated on a surface of the safe conductive coating and/or the current collector, wherein the active material coating is a positive electrode active material coating or a negative electrode active material coating.

22. The electrode plate according to any one of claims 17-21, wherein,
the conductive agent in the safe conductive coating is of a same type as a conductive agent in the active material coating.

23. A method for preparing an electrode plate according to any one of claims 17-22, comprising a step of coating a safe conductive liquid comprising the expandable microbead, the conductive agent, the binder, and optionally the dispersant on the part or whole of the current collector, wherein the expandable microbead has a core-shell structure, wherein the shell comprises or consists of a melamine resin, and the core comprises a foamable azo compound;
optionally, the shell has a thickness of 0.05-0.5 µm, optionally 0.1-0.2 µm;
optionally, the foamable azo compound includes azodicarbonamide, azobisisobutyronitrile, and/or diisopropyl azodicarboxylate;
optionally, the expandable microbead has an initial foaming temperature of 80°C-200°C, and an optimal initial foaming temperature of 100°C-150°C; and
optionally, the expandable microbead has a Dv50 of 0.2-10 µm, optionally 0.5-5 µm,and optionally, the expandable microbead has a Dv50 of less than or equal to a thickness of the safe conductive coating, and
optionally, the conductive agent is carbon black, acetylene black, and/or Ketjen black.

24. The method for preparing an electrode plate according to claim 23, wherein,
the step of coating the safe conductive liquid comprising the expandable microbead, the conductive agent, the binder, and optionally the dispersant on the part or whole of the current collector specifically comprises:
(1) dispersing the conductive agent, the expandable microbead, the binder, and optionally the dispersant at a weight ratio of (20-70%):(5-70%):(5-30%):(0-10%) in a solvent, and sufficiently stirring the resulting mixture, to provide a slurry with a solid content of 10-30%, and
(2) uniformly coating the slurry prepared in the step (1) on a surface of the part or whole of the current collector, optionally, with a coating thickness of 0.2-10 µm.

25. A secondary battery, comprising a positive electrode plate, an electrolyte, and a negative electrode plate, wherein the positive electrode plate or the negative electrode plate comprises or is the electrode plate according to any one of claims 16-22 or the electrode plate prepared using the method according to claim 23 or 24.
